(19) Europäisches Patentamt
European Patent Office
Office européen des brevets

(11) EP 1 962 593 B1

(12) **EUROPEAN PATENT SPECIFICATION**

(45) Date of publication and mention of the grant of the patent:
**23.01.2013 Bulletin 2013/04**

(21) Application number: **06829262.2**

(22) Date of filing: **04.12.2006**

(51) Int Cl.:
***A01N 37/50*** *(2006.01)* ***A01N 47/04*** *(2006.01)*
***A01P 3/00*** *(2006.01)*

(86) International application number:
**PCT/EP2006/011605**

(87) International publication number:
**WO 2007/068367 (21.06.2007 Gazette 2007/25)**

(54) **FUNGICIDAL ACTIVE COMPOUND COMBINATION**

FUNGIZIDE WIRKSTOFFKOMBINATION

COMBINAISON DE COMPOSES ACTIFS FONGICIDES

(84) Designated Contracting States:
**AT BE BG CH CY CZ DE DK EE ES FI FR GB GR HU IE IS IT LI LT LU LV MC NL PL PT RO SE SI SK TR**

(30) Priority: **16.12.2005 DE 102005060281**

(43) Date of publication of application:
**03.09.2008 Bulletin 2008/36**

(73) Proprietor: **Bayer CropScience AG**
**40789 Monheim (DE)**

(72) Inventors:
- **HÄUSER-HAHN, Isolde**
**51375 Leverkusen (DE)**
- **DAHMEN, Peter**
**41470 Neuss (DE)**
- **WITZENBERGER, Albert**
**51399 Burscheid (DE)**
- **WACHENDORFF-NEUMANN, Ulrike**
**56566 Neuwied (DE)**

(56) References cited:
**WO-A-95/35033 WO-A-97/00012**
**WO-A-97/06684**

- **ANONYMOUS: "Fungicidal compositions" RESEARCH DISCLOSURE, MASON PUBLICATIONS, HAMPSHIRE, GB, vol. 415, no. 12, November 1998 (1998-11), pages 1437-1439, XP007123477 ISSN: 0374-4353 cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 962 593 B1

## Description

The present invention relates to a novel active compound combination which comprises a known oxime ether derivative and a known bis-thiocarbamate and which is highly suitable for controlling phytopathogenic fungi.
It is already known that the oxime derivative 2-[α-{[(α-methyl-3-trifluoromethyl-benzyl)imino]-oxy}-o-tolyl]-glyoxylic acid methyl ester O-methyloxime with the Common Name trifloxystrobin has fungicidal properties (cf. EP-A-0 460 575). The activity of this compound is good; however, it is sometimes unsatisfactory at low application rates. The preparation of this compound is likewise known from EP-A-0 460 575.
Moreover, it is known that the phthalimide 3a,4,7,7a-tetrahydro-2-[(trichloromethyl)thio)-1H-isoindole-1,3 (2H)-dione with the Common Name captan has fungicidal properties (cf. US 2553770). The activity of this compound is good; however, it is sometimes unsatisfactory at low application rates. The preparation of this compound is likewise known.
Moreover, it is known that trifloxystrobin can generally be combined with various fungicides (for example WO 97/00012, WO 97/00013). In a relatively long list, one of the possible mixing partners mentioned is inter alia propineb (Research Disclosure 41512 **1998,** pp. 1437 - 1439).
Since the environmental and economic requirements imposed on modern-day fungicides are continually increasing, with regard, for example, to the spectrum of action, toxicity, selectivity; application rate, formation of residues, and favourable preparability, and since, furthermore, there may be problems, for example, with resistances, a constant task is to develop new fungicides which in some areas at least have advantages over their known counterparts.
The invention provides active compound combinations which in in some aspects at least achieve the stated objectives.
It has been found that the novel active compound combination comprising 2-[α-{[(α-methyl-3-trifluoromethyl-benzyl)imino]oxy}-o-tolyl]-glyoxylic acid methyl ester O-methyloxime of the formula (I)

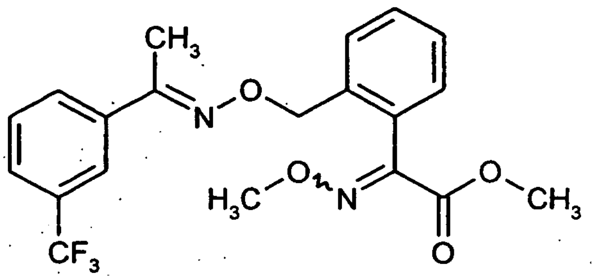

(I)
(trifloxystrobin)

and

(2) 3a,4,7,7a-tetrahydro-2-[(trichloromethyl)thio]-1H-isoindole-1,3(2H)-dione (reference: US 2553770) of the formula (II)

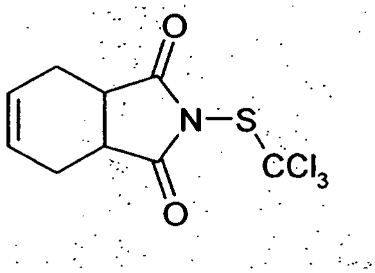

(II)
(captan)

has very good fungicidal properties:
Surprisingly the fungicidal activity of the active-compound combinations of the invention is substantially higher than the sum of the activities of the individual active compounds. In other words there is an unforseeable, true synergistic effect and not merely a supplementation of activities.
A synergistic effect is particularly apparent when the active compounds are present in the active compound combinations according to the invention in certain weight ratios. However, the weight ratios of the active compounds in the active compound combinations can be varied within a certain range.
Preferred mixing ratios are those where trifloxystrobin and captan are present in a ratio of from 1 : 10 to 1: 19.
Furthermore preferred mixing ratios are those where trifloxystrobin and captan are present in a ratio of from

1 : 11 to 1:18.

Particularly preferred mixing ratios are those where trifloxystrobin and captan are present in a ratio of from 1 : 12 to 1:18.

Very particularly preferred mixing ratios are those where trifloxystrobin and captan are present in a ratio of from 1 : 13 to 1:17.

Furthermore very particularly preferred mixing ratios are those where trifloxystrobin and captan are present in a ratio of from 1 : 13 to 1:16.

Furthermore very particularly preferred mixing ratios are those where trifloxystrobin and captan are present in a ratio of from 1 : 14 to 1:16.

In a very particularly preferred mixing ratio, trifloxystrobin and captan are present in a ratio of 1:15.

The stated active compounds trifloxystrobin and captan are commercially available. Information on acquisition and, where appropriate, synthesis are found in C.D.S. Tomlin, The Pesticide Manual, 13th edition, British Crop Protection Council, Farnham 2003 and the literature cited therein. The active compound of the formula (I) is known (cr., for example, EP-A-460 575).

It is evident from the structural formula of the active compound of the formula (I) that the compound may be present as E or Z isomer. Accordingly, the compound (I) may be present as a mixture of different isomers or else in the form of a single isomer. Preferred is the compound of the formula (I) in which it is present as E isomer.

The active compound combinations according to the invention have potent microbicidal activity and can be employed for controlling unwanted microorganisms, such as fungi and bacteria, in crop protection and in the protection of materials.

Fungicides, can be employed in crop protection for controlling Plasmodiophoromycetes, Oomycetes, Chytridiomycetes, Zygomycetes, Ascomycetes, Basidiomycetes and Deuteromycetes.

Bactericides can be employed in crop protection for controlling Pseudomonadaceae, Rhizobiaceae, Enterobacteriaceae, Corynebacteriaceae and Streptomycetaceae.

The active compound combinations according to the invention have very good fungicidal properties and can be employed for controlling phytopathogenic fungi, such as Plasmodiophoromycetes, Oomycetes, Chytridiomycetes, Zygomycetes, Ascomycetes, Basidiomycetes, Deuteromycetes, etc.

Some pathogens causing fungal and bacterial diseases which come under the generic names listed above may be mentioned as examples, but not by way of limitation:

diseases caused by powdery mildew pathogens, such as, for example
Blumeria species such as, for example, Blumeria graminis;
Podosphaera species such as, for example, Podosphaera leucotricha;
Sphaerotheca species such as, for example, Sphaerotheca fuliginea;
Uncinula species such as, for example, Uncinula necator;
diseases caused by rust pathogens such as, for example,
Gymnosporangium species such as, for example, Gymnosporangium sabinae Hemileia species such as, for example, Hemileia vastatrix;
Phakopsora species such as, for example, Phakopsora pachyrhizi and Phakopsora meibomiae;
Puccinia species such as, for example, Puccinia recondita;
Uromyces species such as, for example, Uromyces appendiculatus;
diseases caused by pathogens from the Oomycetene group such as, for example,
Bremia species such as, for example, Bremia lactucae;
Peronospora species such as, for example, Peronospora pisi or P. brassicae;
Phytophthora species such as, for example, Phytophthora infestans;
Plasmopara species such as, for example, Plasmopara viticola;
Pseudoperonospora species such as, for example, Pseudoperonospora humuli or Pseudoperonospora cubensis;
Pythium species such as, for example, Pythium ultimum;
leaf spot diseases and leaf wilts caused by, for example,
Alternaria species such as, for example, Alternaria solani;
Cercospora species such as, for example, Cercospora beticola;
Cladiosporum species such as, for example, Cladiosporium cucumerinum;
Cochliobolus species such as, for example, Cochliobolus sativus
(conidial form: Drechslera, syn: Helminthosporium);
Colletotrichum species such as, for example, Colletotrichum lindemuthanium;
Cycloconium species such as, for example, Cycloconium oleaginum;
Diaporthe species such as, for example, Diaporthe citri;
Elsinoe species such as, for example, Elsinoe fawcettii;

Gloeosporium species such as, for example, Gloeosporium laeticolor;
Glomerella species such as, for example, Glomerella cingulata;
Guignardia species such as, for example, Guignardia bidwelli;
Leptosphaeria species such as, for example, Leptosphaeria maculans;
Magnaporthe species such as, for example, Magnaporthe grisea;
Mycosphaerella species such as, for example, Mycosphaerella fijiensis;
Phaeosphaeria species such as, for example, Phaeosphaeria nodorum;
Pyrenophora species such as, for example, Pyrenophora teres;
Ramularia species such as, for example, Ramularia collo-cygni;
Rhynchosporium species such as, for example, Rhynchosporium secalis;
Septoria species such as, for example, Septoria apii;
Typhula species such as, for example, Typhula incarnata;
Venturia species such as, for example, Venturia inaequalis;
root and stem diseases caused by, for example,
Corticium species such as, for example, Corticium graminearum;
Fusarium species such as, for example, Fusarium oxysporum;
Gaeumannomyces species such as, for example, Gaeumannomyces graminis;
Rhizoctonia species such as, for example, Rhizoctonia solani;
Tapesia species such as; for example, Tapesia acuformis;
Thielaviopsis species such as, for example, Thielaviopsis basicola;
ear and panicle diseases (including maize cobs), caused by, for example,
Alternaria species such as, for example, Alternaria spp.;
Aspergillus species such as, for example, Aspergillus flavus;
Cladosporium species such as, for example, Cladosporium spp.;
Claviceps species such as, for example, Claviceps purpurea;
Fusarium species such as, for example, Fusarium culmorum;
Gibberella species such as, for example, Gibberella zeae;
Monographella species such as, for example, Monographella nivalis;
diseases caused by smuts such as, for example,
Sphacelotheca species such as, for example, Sphacelotheca reiliana;
Tilletia species such as, for example, Tilletia caries;
Urocystis species such as, for example, Urocystis occulta;
Ustilago species such as, for example, Ustilago nuda;
fruit rots caused by, for example,
Aspergillus species such as, for example, Aspergillus flavus;
Botrytis species such as, for example, Botrytis cinerea;
Penicillium species such as, for example, Penicillium expansum;
Sclerotinia species such as, for example, Sclerotinia sclerotiorum;
Verticilium species such as, for example, Verticilium alboatrum;
seed- and soil-borne rot and wilts, and seedling diseases, caused by, for example,
Fusarium species such as, for example, Fusarium culmorum;
Phytophthora species such as, for example, Phytophthora cactorum;
Pythium species such as, for example, Pythium ultimum;
Rhizoctonia species such as, for example, Rhizoctonia solani;
Sclerotium species such as, for example, Sclerotium rolfsii;
cankers, galls and witches' broom disease, caused by, for example,
Nectria species such as, for example, Nectria galligena;
wilts caused by, for example,
Monilinia species such as, for example, Monilinia laxa;
deformations of leaves, flowers and fruits, caused by, for example,
Taphrina species such as, for example, Taphrina deformans;
degenerative diseases of woody species, caused by, for example,
Esca species such as, for example, Phaemoniella clamydospora;
diseases of inflorescences and seeds, caused by, for example,
Botrytis species such as, for example, Botrytis cinerea;
diseases of the plant tubers, caused by, for example,
Rhizoctonia species such as, for example, Rhizoctonia solani;
diseases caused by bacterial pathogens such as, for example:

Xanthomonas species such as, for example, Xanthomonas campestris pv. oryzae;

Pseudomonas species such as, for example, Pseudomonas syringae pv. lachrymans;

Erwinia species such as, for example, Erwinia amylovora;

The following diseases of soybeans can preferably be controlled:

Fungal diseases on leaves, stems, pods and seeds caused by, for example,
alternaria leaf spot (Alternaria spec. atrans tenuissima), anthracnose (Colletotrichum gloeosporoides dematium var. truncatum), brown spot (Septoria glycines), cercospora leaf spot and blight (Cercospora kikuchii), choanephora leaf blight (Choanephora infundibulifera trispora (syn.)), dactuliophora leaf spot (Dactuliophora glycines), downy mildew (Peronospora manshurica), drechslera blight (Drechslera glycini), frogeye leaf spot (Cercospora sojina), leptosphaerulina leaf spot (Leptosphaerulina trifolii), phyllostica leaf spot (Phyllosticta sojaecola), powdery mildew (Microsphaera diffusa), pyrenochaeta leaf spot (Pyrenochaeta glycines), rhizoctonia aerial, foliage, and web blight (Rhizoctonia solani), rust (Phakopsora pachyrhizi), scab (Sphaceloma glycines), stemphylium leaf blight (Stemphylium botryosum), target spot (Corynespora cassiicola)

fungal diseases on roots and the stem base caused by, for example,
black root rot (Calonectria crotalariae), charcoal rot (Macrophomina phaseolina), fusarium blight or wilt, root rot, and pod and collar rot (Fusarium oxysporum, Fusarium orthoceras, Fusarium semitectum, Fusarium equiseti), mycoleptodiscus root rot (Mycoleptodiscus terrestris), neocosmospora (Neocosmopspora vasinfecta), pod and stem blight (Diaporthe phaseotorum), stem canker (Diaporthe phaseolorum var. caulivora), phytophthora rot (Phytophthora megasperma), brown stem rot (Phialophora gregata), pythium rot (Pythium aphanidermatum, Pythium irregulare, Pythium debaryanum, Pythium myriotylum, Pythium ultimum), rhizoctonia root rot, stem decay, and damping-off (Rhizoctonia solani), sclerotinia stem decay (Sclerotinia sclerotiorum), sclerotinia southern blight (Sclerotinia rolfsii), thielaviopsis root rot (Thielaviopsis basicola).

The active compounds according to the invention also show a strong invigorating action in plants. Accordingly, they are suitable for mobilizing the internal defences of the plant against attack by unwanted microorganisms.
In the present context, plant-invigorating (resistance-inducing) compounds are to be understood as meaning substances which are capable of stimulating the defence system of plants such that, when the treated plants are subsequently inoculated with unwanted microorganisms, they display substantial resistance to these microorganisms.
In the present case, unwanted microorganisms are to be understood as meaning phytopathogenic fungi and bacteria. The compounds according to the invention can thus be used to protect plants within a certain period of time after treatment against attack by the pathogens mentioned. The period of time for which this protection is achieved generally extends for 1 to 10 days, preferably 1 to 7 days, from the treatment of the plants with the active compounds.
The active compound combinations according to the invention are particularly suitable for controlling mildew and leaf blotch diseases, fruit and blossom rots, storage diseases and secondary infections by Aspergillus/Penicillium etc.
The active compound combinations according to the invention are particularly suitable for use in viticulture, fruit cultivation, in plantation crops, in the cultivation of vegetables and in leguminous plants.
The fact that the active compound combinations are well tolerated by plants at the concentrations required for controlling plant diseases permits the treatment of above-ground parts of plants, of propagation stock and seeds, and of the soil. The active compound combinations according to the invention can be used for foliar application or else as seed dressings.
The active compound combinations according to the invention are also suitable for increasing the harvest yield. In addition, they show reduced toxicity and are well tolerated by plants.
According to the invention, it is possible to treat all plants and parts of plants. Plants are to be understood here as meaning all plants and plant populations, such as desired and undesired wild plants or crop plants (including naturally occurring crop plants). Crop plants can be plants which can be obtained by conventional breeding and optimization methods or by biotechnological and genetic engineering methods or combinations of these methods, including the transgenic plants and including plant cultivars which can or cannot be protected by plant breeders' certificates. Parts of plants are to be understood as meaning all above-ground and below-ground parts and organs of plants, such as shoot, leaf, flower and root, examples which may be mentioned being leaves, needles, stems, trunks, flowers, fruit-bodies, fruits and seeds and also roots, tubers and rhizomes. Parts of plants also include harvested material and vegetative and generative propagation material, for example seedlings, tubers, rhizomes, cuttings and seeds.
As already mentioned above, it is possible to treat all plants and their parts according to the invention. In a preferred embodiment, wild plant species and plant cultivars, or those obtained by conventional biological breeding,

such as crossing or protoplast fusion, and parts thereof, are treated. In a further preferred embodiment, transgenic plants and plant cultivars obtained by genetic engineering, if appropriate in combination with conventional methods (Genetically Modified Organisms), and parts thereof, are treated. The term "parts" or "parts of plants" or "plant parts" has been explained above.

Particularly preferably, plants of the plant cultivars which are in each case commercially available or in use are treated according to the invention. Plant cultivars are to be understood as meaning plants having new properties ("traits") and which have been obtained by conventional breezing, by mutagenesis or by recombinant DNA techniques. They can be cultivars, varieties, bio- or genotype.

Depending on the plant species or plant cultivars, their location and growth conditions (soils, climate, vegetation period, diet), the treatment according to the invention may also result in superadditive ("synergistic") effects. Thus, for example, reduced application rates and/or a widening of the activity spectrum and/or an increase in the activity of the substances and compositions which can be used according to the invention, better plant growth, increased tolerance to high or low temperatures, increased tolerance to drought or to water or soil salt content, increased flowering performance, easier harvesting, accelerated maturation, higher harvest yields, better quality and/or a higher nutritional value of the harvested products, better storage stability and/or processability of the harvested products are possible which exceed the effects which were actually to be expected.

The transgenic plants or .plant cultivars (i.e. those obtained by genetic engineering) which are preferably to be treated according to the invention include all plants which, in the genetic modification, received genetic material which imparted particularly advantageous useful properties ("traits") to these plants. Examples of such, properties are better plant growth, increased tolerance to high or low temperatures, increased tolerance to drought or to water or soil salt content, increased flowering performance, easier harvesting, accelerated maturation, higher harvest yields, better quality and/or a higher nutritional value of the harvested products, better storage stability and/or processability of the harvested products. Further and particularly emphasized examples of such properties are a better defence of the plants against animal and microbial pests, such as against insects, mites, phytopathogenic fungi, bacteria and/or viruses, and also increased tolerance of the plants to certain herbicidally active compounds. Examples of transgenic plants which may be mentioned are the important crop plants, such as cereals (wheat, rice), maize, soya beans, potatoes, cotton, tobacco, oilseed rape and also fruit plants (with the fruits apples, pears, citrus fruits and grapes), and particular emphasis is given to maize, soya beans, potatoes, cotton, tobacco and oilseed rape. Traits that are particularly emphasized are increased defence of the plants against insects, arachnids, nematodes and slugs and snails by toxins formed in the plants, in particular those formed in the plants by the genetic material from Bacillus thuringiensis (for example by the genes CryIA (a), CryIA(b), CryIA(c), CryIIA, CryIIIA, CryIIIB2, Cry9c, Cry2Ab, Cry3Bb and CryIF and also combinations thereof) (hereinbelow referred to as "Bt plants"). Traits that are also particularly emphasized are the increased defence of the plants against fungi, bacteria and viruses by systemic acquired resistance (SAR), systemin, phytoalexins, elicitors and resistance genes and correspondingly expressed proteins and toxins. Traits that are furthermore particularly emphasized are the increased tolerance of the plants to certain herbicidally active compounds, for example imidazolinones, sulphonylureas, glyphosate or phosphinotricin (for example the "PAT" gene). The genes which impart the desired traits in question can also be present in combination with one another in the transgenic plants. Examples of "Bt plants" which may be mentioned are maize varieties, cotton varieties, soya bean varieties and potato varieties which are sold under the trade names YIELD GARD® (for example maize, cotton, soya beans), KnockOut® (for example maize), StarLink® (for example maize), Bollgard® (cotton), Nucoton® (cotton) and NewLeaf® (potato). Examples of herbicide-tolerant plants which may be mentioned are maize varieties, cotton varieties and soya bean varieties which are sold under the trade names Roundup Ready® (tolerance to glyphosate, for example maize, cotton, soya bean), Liberty Link® (tolerance to phosphinotricin, for example oilseed rape), IMI® (tolerance to imidazolinones) and STS® (tolerance to sulphonylureas, for example maize). Herbicide-resistant plants (plants bred in a conventional manner for herbicide tolerance) which may be mentioned also include the varieties sold under the name Clearfield® (for example maize). Of course, these statements also apply to plant cultivars which have these genetic traits or genetic traits still to be developed, and which will be developed and/or marketed in the future.

The plants listed can be treated according to the invention in a particularly advantageous manner with the active compound mixtures according to the invention. The preferred ranges stated above for the active compounds or mixtures also apply to the treatment of these plants. Particular emphasis is given to the treatment of plants with the mixtures specifically mentioned in the present text.

The treatment of the plants and parts of plants according to the invention with the active compounds is carried out directly or by action on their environment, habitat or storage area according to customary treatment methods, for example by dipping, spraying, evaporating, atomizing, broadcasting, brushing-on and, in the case of propagation material, in particular in the case of seeds, furthermore by one- or multilayer coating.

The active compound combinations according to the invention can be converted into the customary formulations, such as solutions, emulsions, suspensions, powders, foams, pastes, granules, aerosols and microencapsulations in polymeric substances and in coating compositions for seeds, and also ULV formulations.

These formulations are produced in a known manner, for example by mixing the active compounds or active compound combinations with extenders, that is liquid solvents, liquefied gases under pressure, and/or solid carriers, optionally with the use of surfactants, that is emulsifiers and/or dispersants, and/or foam formers. If the extender used is water, it is also possible to employ, for example, organic solvents as auxiliary solvents. Essentially, suitable liquid solvents are: aromatics such as xylene, toluene or alkylnaphthalenes, chlorinated aromatics or chlorinated aliphatic hydrocarbons such as chlorobenzenes, chloroethylenes or methylene chloride, aliphatic hydrocarbons such as cyclohexane or paraffins, for example petroleum fractions, alcohols such as butanol or glycol and their ethers and esters, ketones such as acetone, methyl ethyl ketone, methyl isobutyl ketone or cyclohexanone, strongly polar solvents such as dimethylformamide or dimethyl sulphoxide, or else water. Liquefied gaseous extenders or carriers are to be understood as meaning liquids which are gaseous at standard temperature and under atmospheric pressure, for example aerosol propellants such as halogenated hydrocarbons, or else butane, propane, nitrogen and carbon dioxide. Suitable solid carriers are: for example ground natural minerals such as kaolins, clays, talc, chalk, quartz, attapulgite, montmorillonite or diatomaceous earth, and ground synthetic minerals such as finely divided silica, alumina and silicates. Suitable solid carriers for granules are: for example crushed and fractionated natural rocks such as calcite, pumice, marble, sepiolite and dolomite, or else synthetic granules of inorganic and organic meals, and granules of organic material such as sawdust, coconut shells, maize cobs and tobacco stalks. Suitable emulsifiers and/or foam formers are: for example nonionic and anionic emulsifiers, such as polyoxyethylene fatty acid esters, polyoxyethylene fatty alcohol ethers, for example alkylaryl polyglycol ethers, alkylsulphonates, alkyl sulphates, arylsulphonates, or else protein hydrolysates. Suitable dispersants are: for example lignosulphite waste liquors and methylcellulose.

Tackifiers such as carboxymethylcellulose, natural and synthetic polymers in the form of powders, granules or latices, such as gum arabic, polyvinyl alcohol and polyvinyl acetate, or else natural phospholipids such as cephalins and lecithins and synthetic phospholipids can be used in the formulations. Other possible additives are mineral and vegetable oils.

It is possible to use colorants such as inorganic pigments, for example iron oxide, titanium oxide and Prussian Blue, and organic dyestuffs such as alizarin dyestuffs, azo dyestuffs and metal phthalocyanine dyestuffs, and trace nutrients such as salts of iron, manganese, boron, copper, cobalt, molybdenum and zinc.

The formulations generally comprise between 0.1 and 95 per cent by weight of active compound, preferably between 0.5 and 90%.

The active compound combinations according to the invention can, as such or in their formulations, also be used in a mixture with known fungicides, bactericides, acaricides, nematicides or insecticides, to broaden, for example, the activity spectrum or to prevent development of resistance.

**Fungicides:**

*1. Nucleic acid synthesis inhibitors*
benalaxyl, benalaxyl-M, bupirimate, chiralaxyl, clozylacon, dimethirimol, ethirimol, furalaxyl, hymexazol, metalaxyl-M, ofurace, oxadixyl, oxolinic acid

*2. Mitosis and cell division inhibitors*
benomyl, carbendazim, diethofencarb, fuberidazole, pencycuron, thiabendazole, thiophanate-methyl, zoxamide

*3. Inhibitors of the respiratory chain*

*3.1 Complex I*
diflumetorim
*3.2 Complex II*
boscalid, carboxin, fenfuram, flutolanil, furametpyr, mepronil, oxycarboxin, penthiopyrad, thifluzamide
*3.3 Complex III*
azoxystrobin, cyazofamid, dimoxystrobin, enestrobin, famoxadone, fenamidone, fluoxastrobin, kresoxim-methyl metominostrobin, orysastrobin, pyraclostrobin, picoxystrobin
*3.4 Decouplers*
dinocap, fluazinam
*3.5 ATP production inhibitors*
fentin acetate, fentin chloride, fentin hydroxide, silthiofam

*4. Amino acid and protein biosynthesis inhibitors*

andoprim, blasticidin-S, cyprodinil, kasugamycin, kasugamycin hydrochloride hydrate, mepanipyrim, pyrimethanil

*5. Signal transduction inhibitors*
fenpiclonil, fludioxonil, quinoxyfen

*6. Lipid and membrane synthesis inhibitors*
chlozolinate, iprodione, procymidone, vinclozolin
pyrazophos, edifenphos, iprobenfos (IBP), isoprothiolane
tolclofos-methyl, biphenyl,
iodocarb, propamocarb, propamocarb hydrochloride

*7. Inhibitors of ergosterol biosynthesis*
fenhexamid,
azaconazole, bitertanol, bromuconazole, cyproconazole, diclobutrazole, difenoconazole, diniconazole, diniconazole-M, epoxiconazole, etaconazole, fenbuconazole, fluquinconazole, flusilazole, flutriafol, furconazole, furconazole-cis, hexaconazole, imibenconazole, ipconazole, metconazole, myclobutanil, paclobutrazol, penconazole, propiconazole, prothioconazole, simeconazole, tebuconazole, tetraconazole, triadimefon, triadimenol, triticonazole, uniconazole, voriconazole, imazalil, imazalil sulphate, oxpoconazole, fenarimol, flurprimidol, nuarimol, pyrifenox, triforine, pefurazoate, prochloraz, triflumizole, viniconazole,
aldimorph, dodemorph, dodemorph acetate, fenpropimorph, tridemorph, fenpropidin, spiroxamine,
naftifine, pyributicarb, terbinafine

*8. Cell wall synthesis inhibitors*
benthiavalicarb, bialaphos, dimethomorph, flumorph, iprovalicarb, polyoxins, polyoxorim, validamycin A

*9. Melanin biosynthesis inhibitors*
capropamid, diclocymet, fenoxanil, phthalide, pyroquilon, tricyclazole

*10. Resistance inductors*
acibenzolar-S-methyl, probenazole, tiadinil

*11. Compounds with multisite activity*
captafol, captan, chlorothalonil, copper salts, such as: copper hydroxide, copper naphthenate, copper oxychloride, copper sulphate, copper oxide, oxine copper and Bordeaux mixture, dichlofluanid, dithianon, dodine, dodine free base, ferbam, fluorofolpet, folpet, fosetyl-Al, guazatine, guazatine acetate, iminoctadine, iminoctadine albesilate, iminoctadine triacetate, mancopper, mancozeb, maneb, metiram, metiram zinc, propineb, sulphur and sulphur preparations comprising calcium polysulphide, thiram, tolylfluanid, zineb, ziram

12. *Unknown*
amibromdol, benthiazole, bethoxazin, capsimycin, carvone, chinomethionat, chloropicrin, cufraneb, cyflufenamid, cymoxanil, dazomet, debacarb, diclomezine, dichlorophen, dicloran, difenzoquat, difenzoquat methylsulphate, diphenylamine, ethaboxam, ferimzone, flumetover, flusulfamide, fluopicolide, fluoroimide, hexachlorobenzene, 8-hydroxyquinoline sulphate, irumamycin, methasulfocarb, metrafenone, methyl isothiocyanate, mildiomycin, natamycin, nickel dimethyldithiocarbamate, nitrothal-isopropyl, octhilinone, oxamocarb, oxyfenthiin, pentachlorophenol and salts, 2-phenylphenol and salts, piperalin, propanosine-sodium, proquinazid, pyrrolnitrin, quintozene, tecloftalam, tecnazene, triazoxide, trichlamid, zarilamid and 2,3,5,6-tetrachloro-4-(methylsulphonyl)pyridine, N-(4-chloro-2-nitrophenyl)-N-ethyl-4-methylbenzenesulphonamide, 2-amino-4-methyl-N-phenyl-5-thiazolecarboxamide, 2-chloro-N-(2,3-dihydro-1,1,3-trimethyl-1H-inden-4-yl)-3-pyridinecarboxamide, 3-[5-(4-chlorophenyl)-2,3-dimethylisoxazolidin-3-yl]pyridine, cis-1-(4-chlorophenyl)-2-(1H-1,2,4-triazol-1-yl)cycloheptanol, 2,4-dihydro-5-methoxy-2-methyl-4-[[[[1-[3-(trifluoromethyl)phenyl]ethylidene]amino]oxy]methyl]phenyl]-3H-1,2,3-triazol-3-one (185336-79-2), methyl 1-(2,3-dihydro-2,2-dimethyl-1H-inden-1-yl)-1H-imidazole-5-carboxylate, 3,4,5-trichloro-2,6-pyridinedicarbonitrile, methyl 2-[[[cyclopropyl-[(4-methoxyphenyl)imino]methyl]thio]methyl]-$\alpha$-(methoxymethylene)benzyl acetate, 4-chloro-$\alpha$-propynyloxy-N-[2-[3-methoxy-4-(2-propynyloxy)phenyl]ethyl]benzacetamide, (2S)-N-[2-[4-[[3-(4-chlorophenyl)-2-propynyl]oxy]-3-methoxyphenyl]ethyl]-3-methyl-2-[(methylsulphonyl)amino]butanamide, 5-chloro-7-(4-methylpiperidin-1-yl)-6-(2,4,6-trifluorophenyl)[1,2,4]triazolo[1,5-a]pyrimidine, 5-chloro-6-(2,4,6-trifluorophenyl)-N-[(1R)-1,2,2-trimethylpropyl][1,2,4]triazolo[1,5-a]pyrimidin-7-amine, 5-chloro-N-[(1R)-1,2-dimethylpropyl]-6-(2,4,6-trifluorophenyl)[1,2,4]triazolo[1,5-a]pyrimidin-7-amine, N-[1-(5-bromo-3-chloropyridin-2-yl)ethyl]-2,4-dichloronicotinamide, N-(5-bromo-3-chloropyridin-2-yl)methyl-2,4-dichloronicotinamide, 2-butoxy-6-iodo-3-propylbenzopyranon-4-one, N-{(Z)-[(cyclopropylmethoxy)imino](6-(difluoromethoxy)-2,3-difluorophenyl]methyl}-2-benzacetamide, N-(3-ethyl-3,5,5-trimethylcyclohexyl)-3-formylamino-2-hydroxybenzamide, 2-[[[[1-[3-(1-fluoro-2-phenylethyl)oxy] phenyl]ethylidene]amino]oxy]methyl]-α-(methoxyimino)-N-methyl-αE-benzacetamide, N-{2-[3-chloro-5-(trifluoromethyl)pyridin-2-yl]ethyl}-2-(trifluoromethyl)benzamide, N-(3',4'-dichloro-5-fluorobiphenyl-2-yl)-3-(difluoromethyl)-1-methyl-1H-pyrazole-4-carboxamide, N-(6-methoxy-3-pyridinyl)cyclopropanecarboxamide, 1-[(4-methoxyphenoxy)methyl]-2,2-dimethylpropyl-1H-imidazole-1-carboxylic acid, O-[1-[(4-methoxyphenoxy)methyl]-2,2-dimethylpropyl]-1H-imidazole-1-carbothioic acid, 2-(2-{[6-(3-chloro-2-methylphenoxy)-5-fluoropyrimidin-4-yl]oxy}phenyl)-2-(methoxyimino)-N-methylacetamide

**Bactericides:**

bronopol, dichlorophen, nitrapyrin, nickel dimethyldithiocarbamate, kasugamycin, octhilinone, furancarboxylic acid, oxytetracyclin, probenazole, streptomycin, tecloftalam, copper sulphate and other copper preparations.

**Insecticides / acaricides / nematicides:**

*1. Acetylcholinesterase (AChE) inhibitors*

1.1 carbamates (for example alanycarb, aldicarb, aldoxycarb, allyxycarb, aminocarb, azamethiphos, bendiocarb, benfuracarb, bufencarb, butacarb, butocarboxim, butoxycarboxim, carbaryl, carbofuran, carbosulfan, chloethocarb, cbumaphos, cyanofenphos, cyanophos, dimetilan, ethiofencarb, fenobucarb, fenothiocarb, formetanate, furathiocarb, isoprocarb, metam-sodium, methiocarb, methomyl, metolcarb, oxamyl, pirimicarb, promecarb, propoxur, thiodicarb, thiofanox, triazamate, trimethacarb, XMC, xylylcarb)

1.2 organophosphates (for example acephate, azamethiphos, azinphos (-methyl, -ethyl), bromophos-ethyl, bromfenvinfos (-methyl), butathiofos, cadusafos, carbophenothion, chlorethoxyfos, chlorfenvinphos, chlormephos, chlorpyrifos (-methyl/-ethyl), coumaphos, cyanofenphos, cyanophos, chlorfenvinphos, demeton-s-methyl, demeton-s-methylsulphon, dialifos, diazinon, dichlofenthion, dichlorvos/DDVP, dicrotophos, dimethoate, dimethylvinphos, dioxabenzofos, disulfoton, EPN, ethion, ethoprophos, etrimfos, famphur, fenamiphos, fenitrothion, fensulfothion, fenthion, flupyrazofos, fonofos, formothion, fosmethilan, fosthiazate, heptenophos, iodofenphos, iprobenfos, isazofos, isofenphos, isopropyl o-salicylate, isoxathion; malathion, mecarbam, methacrifos, methamidophos, methidathion, mevinphos; monocrotophos, naled, omethoate, oxydemeton-methyl, parathion (-methyl/-ethyl), phenthoate, phorate, phosalone, phosmet, phosphamidon, phosphocarb, phoxim, pirimiphos (-methyl/-ethyl), profenofos, propaphos, propetamphos, prothiofos, prothoate, pyraclofos, pyridaphenthion, pyridathion, quinalphos, sebufos, sulfotep, sulprofos, tebupirimfos, temephos, terbufos, tetrachlorvinphos, thiometon, triazophos, triclorfon, vamidothion)

*2. Sodium channel modulators/blockers of voltage-gated sodium channels*

2.1 pyrethroids (for example acrinathrin, allethrin (d-cis-trans, d-trans), beta-cyfluthrin, bioallethrin, bioallethrin-S-cyclopentyl-isomer, bioethanomethrin, biopermethrin, bioresmethrin, chlovaporthrin, cis-cypermethrin, cis-resmethrin, cis-permethrin, clocythrin, cycloprothrin, cyfluthrin, cyhalothrin, cypermethrin (alpha-, beta-, theta-, meta-), cyphenothrin, DDT, deltamethrin, empenthrin (1R-isomer), esfenvalerate, etofenprox, fenfluthrin, fenpropathrin, fenpyrithrin, fenvalerate, flubrocythrinate, flucythrinate, flufenprox, flumethrin, fluvalinate, fubfenprox, gamma-cyhalothrin imiprothrin, kadethrin, lambda-cyhalothrin, metofluthrin, permethrin (cis-, trans-), phenothrin (1R-trans isomer), prallethrin, profluthrin, protrifenbute, pyresmethrin, resmethrin, RU 15525, silafluofen, tau-fluvalinate, tefluthrin, terallethrin, tetramethrin (1R-isomer), tralomethrin, transfluthrin, ZXI 8901, pyrethrins (pyrethrum))
2.2 oxadiazines (for example indoxacarb)

*3. Acetylcholine receptor agonists/antagonists*

3.1 chloronicotinyls/neonicotinoids (for example acetamiprid, clothianidin, dinotefuran, imidacloprid, nitenpyram, nithiazine, thiacloprid, thiamethoxam)

3.2 nicotine, bensultap, cartap

*4. Acetylcholine receptor modulators*

4.1 spinosyns (for example spinosad)

*5. Antagonists of GABA-gated chloride channels*

5.1 cyclodiene organochlorines (for example camphechlor, chlordane, endosulfan, gamma-HCH, HCH, heptachlor, lindane, methoxychlor)

5.2 fiproles (for example acetoprole, ethiprole, fipronil, vaniliprole)

*6. Chloride channel activators*

6.1 mectins (for example abamectin, avermectin, emamectin, emamectin-benzoate, ivermectin, milbemectin, milbemycin)

*7. Juvenile hormone mimetics*

(for example diofenolan, epofenonane, fenoxycarb, hydroprene, kinoprene, methoprene, pyriproxifen, triprene)

*8. Ecdyson agonists/disruptors*

8.1 diacylhydrazines (for example chromafenozide, halofenozide, methoxyfenozide, tebufenozide)

*9. Chitin biosynthesis inhibitors*

9.1 benzoylureas (for example bistrifluron, chlofluazuron, diflubenzuron, fluazuron, flucycloxuron, flufenoxuron, hexaflumuron, lufenuron, novaluron, noviflumuron, penfluron, teflubenzuron, triflumuron)

9.2 buprofezin

9.3 cyromazine

*10. Inhibitors of oxidative phosphorylation, A TP disruptors*

10.1 diafenthiuron

10.2 organotins (for example azocyclotin, cyhexatin, fenbutatin-oxide)

*11. Decouplers of oxidative phosphorylation acting by interrupting the H-proton gradient*

11.1 pyrroles (for example chlorfenapyr)

11.2 dinitrophenols (for example binapacryl, dinobuton, dinocap, DNOC)

*12. Site-I electron transport inhibitors*

12.1 METIs (for example fenazaquin, fenpyroximate, pyrimidifen, pyridaben, tebufenpyrad, tolfenpyrad)

12.2 hydramethylnone

12.3 dicofol

*13. Site-II electron transport inhibitors*

13.1 rotenone

*14. Site-III electron transport inhibitors*

14.1 acequinocyl, fluacrypyrim

*15. Microbial disruptors of the insect gut membrane*
Bacillus thuringiensis strains

*16. Inhibitors of fat synthesis*

16.1 tetronic acids (for example spirodiclofen, spiromesifen)

16.2 tetramic acids [for example 3-(2,5-dimethylphenyl)-8-methoxy-2-oxo-1-azaspiro[4.5]dec-3-en-4-yl ethyl carbonate (alias: carbonic acid, 3-(2,5-dimethylphenyl)-8-methoxy-2-oxo-1-azaspiro[4.5]dec-3-en-4-yl ethyl ester, CAS Reg. No.: 382608-10-8) and carbonic acid, cis-3-(2,5-dimethylphenyl)-8-methoxy-2-oxo-1-azaspiro [4.5]dec-3-en-4-yl ethyl ester (CAS Reg. No.: 203313-25-1)]

*17. Carboxamides*
(for example flonicamid)

*18. Octopaminergic agonists*
(for example amitraz)

*19. Inhibitors of magnesium-stimulated ATPase*
(for example propargite)

*20. Phthalamides*
(for example $N^2$-[1,1-dimethyl-2-(methylsulphonyl)ethyl]-3-iodo=$N^1$-[2-methyl-4-[1,2,2,2-tetrafluoro-1-(trifluoromethyl)ethyl]phenyl]-1,2-benzenedicarboxamide (CAS Reg. No.: 272451-65-7), flubendiamide)

*21. Nereistoxin analogues*
(for example thiocyclam hydrogen oxalate, thiosultap-sodium)

*22. Biologicals, hormones or pheromones*
(for example azadirachtin, Bacillus spec., Beauveria spec., Codlemone, Metarrhizium spec., Paecilomyces spec., Thuringiensin, Verticillium spec.)

*23. Active compounds with unknown or unspecific mechanisms of action*

23.1 fumigants (for example aluminium phosphide, methyl bromide, sulphuryl fluoride)
23.2 selective antifeedants (for example cryolite, flonicamid, pymetrozine)
23.3 mite growth inhibitors (for example clofentezine, etoxazole, hexythiazox)
23.4 amidoflumet, benclothiaz, benzoximate, bifenazate, bromopropylate, buprofezin, chinomethionat, chlordimeform, chlorobenzilate, chloropicrin, clothiazoben, cycloprene, cyflumetofen, dicyclanil, fenoxacrim, fentrifanil, flubenzimine, flufenerim, flutenzin, gossyplure, hydramethylnone, japonilure, metoxadiazone, petroleum, piperonyl butoxide, potassium oleate, pyrafluprole, pyridalyl, pyriprole, sulfluramid, tetradifon, tetrasul, triarathene, verbutin,
furthermore the compound 3-methylphenyl propylcarbamate (Tsumacide Z), the compound 3-(5-chloro-3-pyridinyl)-8-(2,2,2-trifluoroethyl)-8-azabicyclo[3.2.1]octane-3-carbonitrile (CAS Reg. No. 185982-80-3) and the corresponding 3-endo-isomer (CAS Reg. No. 185984-60-5) (cf. WO 96/37494, WO 98/25923), and preparations which comprise insecticidally active plant extracts, nematodes, fungi or viruses.

A mixture with other known active compounds, such as herbicides, or with fertilizers and growth regulators, safeners and/or semiochemicals is also possible.

The compounds (I) and (II) can be applied simultaneously, and, if so, either together or separately, or in succession; in the case of separate application, the sequence generally has no consequence for the control outcome.

The active-compound combinations can be used as such, in the form of their formulations or the use forms prepared therefrom, such as ready-to-use solutions, emulsifiable concentrates, emulsions, suspensions, wettable powders, soluble powders and granules. Application is carried out in a customary manner, for example by watering, spraying, atomizing, broadcasting, dusting, dry dressing, moistened dressing, wet dressing, slurry dressing or encrusting.

When using the active-compound combinations according to the invention, the application rates can be varied

within a relatively wide range, depending on the kind of application. For the treatment of parts of plants, the active-compound combination application rates are generally between 0.1 and 10 000 g/ha, preferably between 10 and 1000 g/ha. For seed dressing, the active-compound combination application rates are generally between 0.001 and 50 g per kilogram of seed, preferably between 0.01 and 10 g per kilogram of seed. For the treatment of the soil, the active-compound combination application rates are generally between 0.1 and 10 000 g/ha, preferably between 1 and 5 000 g/ha.

The good fungicidal activity of the active-compound combinations according to the invention is demonstrated by the examples below. Whereas the individual active compounds exhibit weaknesses in fungicidal activity, the combinations display an activity which goes beyond a simple summation of activities.

A synergistic effect is always present in fungicides when the fungicidal activity of the active-compound combinations is greater than the sum of the activities of the active compounds applied individually.

The expected activity for a given combination of two active compounds can be calculated in accordance with S.R. Colby ("Calculating Synergistic and Antagonistic Responses of Herbicide Combination", Weeds 15 (1967), 20-22) as follows:

If

X denotes the efficacy when using active compound A at an application rate of <u>m</u> g/ha,

Y denotes the efficacy when using active compound B at an application rate of <u>n</u>g/ha, and

E denotes the efficacy when using active compounds A and B at application rates of <u>m</u> and <u>n</u> g/ha,

then

$$E = X + Y - \frac{X \cdot Y}{100}$$

The efficacy here is determined in %. 0% denotes an efficacy which corresponds to that of the control, while an efficacy of 100% means that no infestation is observed.

If the actual fungicidal activity is greater than that calculated, then the activity of the combination is superadditive: in other words, a synergistic effect is obtained. In this case the efficacy actually observed must be greater than the value calculated using the above-indicated formula for the expected efficacy (E).

Another method of determining synergistic effects is offered by the Tammes model (Neth. J. Plant Path. 70 (1964) 73-80), where, for example, the theoretical dosage for an efficacy of 90% is determined and is compared with the dosage actually required.

The invention is illustrated by the following examples. The invention is not, however, limited to the examples.

**<u>Example</u>**

**Leptosphaeria nodorum test (wheat) / protective**

| | |
|---|---|
| Solvent: | *50* parts by weight of *N,N-dimethylacetamide* |
| Emulsifier: | 1 part by weight of alkylaryl polyglycol ether |

To prepare a suitable preparation of active compound, 1 part by weight of active compound or active compound combination is mixed with the stated amounts of solvents and emulsifier, and the concentrate is diluted with water to the desired concentration, or a commercial formulation of active compound or active compound combination with water is diluted with water to the desired concentration.

To test for protective activity, young plants are sprayed with the active compound preparation at the stated application rate. After the spray coating has dried on, the plants are sprayed with a spore suspension of ***Leptosphaeria nodorum.*** The plants remain in an incubation cabin at 20°C and 100 % relative atmospheric humidity for 48 hours.

The plants are placed in a greenhouse at a temperature of about 20°C and a relative atmospheric humidity of 80 %.

Evaluation is carried out 10 days after inoculation. Here, 0% means an efficacy which corresponds to that of the control, whereas an efficacy of 100% means that no infection is observed.

The good fungicidal activity of the preferred active compound combination is evident from the example below, whereas the other active compound combinations have weaknesses in their fungicidal activity. The activity also exceeds a simple addition of activities.

The table below shows clearly that the activity found for the active compound combination according to the invention is greater than the calculated activity, i.e. a synergistic effect is present. The synergism found is surprisingly clearly pronounced for the mixing ratios according to the invention, the mixing ratio according to the invention of 1:15 having the most pronounced synergistic effect.

<u>**Table**</u>

| **Leptosphaeria nodorum test (wheat) / protective** | | |
|---|---|---|
| Active compound<br><u>Known:</u> | Active compound application rate in ppm | % efficacy |
| Trifloxystrobin<br>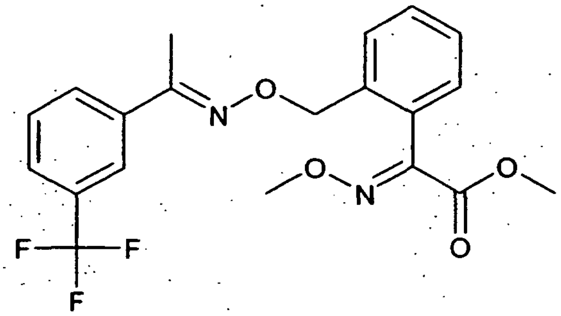 | 25 | 50 |
| Captan<br>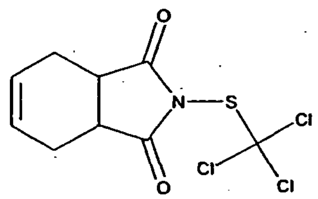 | 500<br>375<br>82.5 | 25<br>25<br>50 |

| Mixture according to the invention: | | | | | | |
|---|---|---|---|---|---|---|
| | | Mixing ratio | Active compound application rate in ppm | | Actual efficacy | Expected value calculated using Colby's formula |
| Trifloxystrobin<br>+<br>Captan | } | **1:20** | 25<br>+<br>500 | } | **75** | **63** |
| Trifloxystrobin<br>+<br>Captan | } | **1:15*** | 25<br>+<br>375 | } | **88** | **63** |
| Trifloxystrobin<br>+<br>Captan | } | **1:3.3** | 25<br>+<br>82.5 | } | **50** | **75** |
| * a mixing ratio according to the invention | | | | | | |

## Claims

1. Active compound combination comprising a compound of the formula (I)

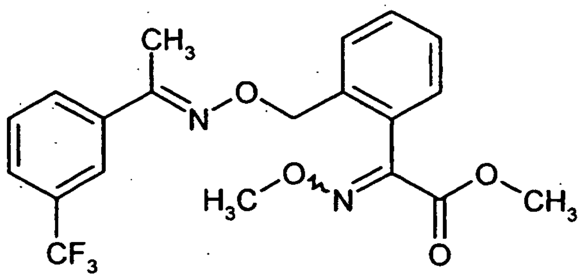

(I)

and
(2) a compound of the formula (II)

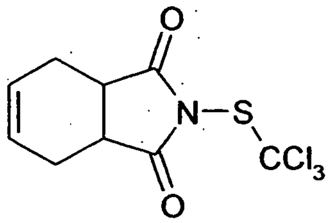

(II)
(captan).

2. Active compound combination according to Claim 1, **characterized in that** in the active compound combination the weight ratio of active compound of the formula (I) to active compound of the formula (II) is from 1:10 to 1:19.

3. Active compound combination according to Claim 1 or 2, **characterized in that** in the active compound combination the weight ratio of active compound of the formula (I) to active compound of the formula (II) is from 1: 12 to 1:18.

4. Active compound combination according to any of Claims 1 to 3, **characterized in that** in the active compound combination the weight ratio of active compound of the formula (I) to active compound of the formula (II) is from 1: 14 to 1:16.

5. Method for controlling phytopathogenic fungi, **characterized in that** an active compound combination according to any of Claims 1 to 4 is allowed to act on the fungi and / or their habitat or the plants, plant parts, seeds, soils, areas, materials or spaces to be kept free from them.

6. Method according to Claim 5, **characterized in that** the compound (I) according to Claim 1 and the compound (II) according to Claim 1 are applied simultaneously, that is together or separately, or in succession.

7. Propagation material, coated with an active compound combination according to one or more of Claims 1 to 4.

8. Fungicidal compositions, comprising an amount of an active compound combination as defined in one or more of Claims 1 to 4.

9. Use of the active compound combination or composition as defined in one or more of Claims 1 to 4 and 8 for controlling fungi.

10. Process for preparing fungicidal compositions, **characterized in that** the active compounds of the active compound combinations according to one or more of Claims 1 to 4 are mixed with extenders and/or surfactants.

## Patentansprüche

1. Wirkstoffkombination, enthaltend eine Verbindung der Formel (I)

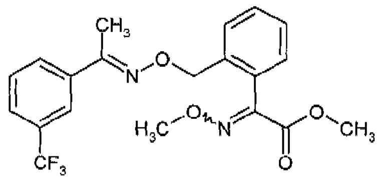

(I)

und
(2) eine Verbindung der Formel (II)

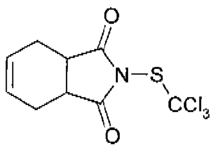

(II)
(Captan) .

2. wirkstoffkombination gemäß Anspruch 1, **dadurch gekennzeichnet, dass** in der Wirkstoffkombination das Gewichtsverhältnis von Werkstoff der Formel (I) zu Wirkstoff der Formel (II) 1:10 bis 1:19 beträgt.

3. Wirkstoffkombination gemäß Anspruch 1 oder 2, **dadurch gekennzeichnet, dass** in der Wirkstoffkombination das Gewichtsverhältnis von Wirkstoff der Formel (I) zu Werkstoff der Formel (II) 1: 12 bis 1:18 beträgt.

4. Wirkstoffkombination gemäß einem der Ansprüche 1 bis 3, **dadurch gekennzeichnet, dass** in der Wirkstoffkombination das Gewichtsverhältnis von Wirkstoff der Formel (I) zu Wirkstoff der Formel (II) 1: 14 bis 1:16 beträgt.

5. Verfahren zur Bekämpfung von phytopathogenen Pilzen, **dadurch gekennzeichnet, dass** man eine Wirkstoffkombination gemäß einem der Ansprüche 1 bis 4 auf die Pilze und/oder deren Lebensraum oder die von ihnen freizuhaltenden Pflanzen, Pflanzenteile, Samen, Böden, Flächen, Materialien oder Räume einwirken lässt.

6. Verfahren gemäß Anspruch 5, **dadurch gekennzeichnet, dass** man die Verbindung (I) gemäß Anspruch 1 und die Verbindung (II) gemäß Anspruch 1 gleichzeitig gemeinsam oder getrennt oder nacheinander ausbringt.

7. Vermehrungsmaterial, beschichtet mit einer Wirkstoffkombination gemäß einem oder mehreren der Ansprüche 1 bis 4.

8. Fungizide Mittel, enthaltend einen Gehalt an einer Wirkstoffkombination wie in einem oder mehreren der Ansprüche 1 bis 4 definiert.

9. Verwendung der Wirkstoffkombination bzw. Mittel wie in den Ansprüche 1 bis 4 und 8 definiert zur Bekämpfung von Pilzen.

10. Verfahren zur Herstellung von fungiziden Mitteln, **dadurch gekennzeichnet, dass** man die Wirkstoffe der Wirkstoffkombinationen gemäß einem oder mehreren der Ansprüche 1 bis 4 mit Streckmitteln und/oder oberflächenaktiven Stoffen vermischt.

## Revendications

1. Combinaison de composés actifs, comprenant un composé de formule (I)

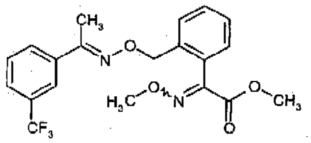

(I)

et

(2) un composé de formule (II)

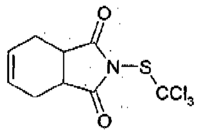

(II)

(captan) .

2. Combinaison de composés actifs selon la revendication 1, **caractérisée en ce que**, dans la combinaison de composés actifs, le rapport pondéral du composé actif de formule (I) au composé actif de formule (II) va de 1:10 à 1:19.

3. Combinaison de composés actifs selon la revendication 1 ou 2, **caractérisée en ce que**, dans la combinaison de composés actifs, le rapport pondéral du composé actif de formule (I) au composé actif de formule (II) va de 1:12 à 1:18.

4. Combinaison de composés actifs selon l'une quelconque des revendications 1 à 3, **caractérisée en ce que**, dans la combinaison de composés actifs, le rapport pondéral du composé actif de formule (I) au composé actif de formule (II) va de 1:14 à 1:16.

5. Méthode de contrôle de champignons phytopathogènes, **caractérisée en ce qu'**on laisse agir une combinaison de composés actifs selon l'une quelconque des revendications 1 à 4 sur les champignons et/ou leur habitat ou les plantes, parties de plantes, semences, sols, zones, matériaux ou espaces devant en être affranchis.

6. Méthode selon la revendication 5, **caractérisée en ce que** le composé (I) selon la revendication 1 et le composé (II) selon la revendication 1 sont appliqués simultanément, c'est-à-dire ensemble ou séparément, ou en succession.

7. Matériau de propagation, revêtu d'une combinaison de composés actifs selon l'une ou plusieurs des revendications 1 à 4.

8. Compositions fongicides, comprenant une quantité d'une combinaison de composés actifs telle que définie selon l'une ou plusieurs des revendications 1 à 4.

9. Utilisation d'une combinaison de composés actifs ou d'une composition telles que définies selon l'une ou plusieurs des revendications 1 à 4 et 8, pour le contrôle de champignons.

10. Procécé de préparation de compositions fongicides, **caractérisé en ce que** les composés actifs des combinaisons de composés actif selon l'une ou plusieurs des revendications 1 à 4 sont mélangés avec des matières de charge et/ou des agents tensioactif.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0460575 A
- US 2553770 A
- WO 9700012 A
- WO 9700013 A
- RU 15525
- WO 9637494 A
- WO 9825923 A


### Non-patent literature cited in the description


- **S.R. COLBY.** Calculating Synergistic and Antagonistic Responses of Herbicide Combination. *Weeds,* 1967, vol. 15, 20-22
- **NETH. J.** *Plant Path.,* 1964, vol. 70, 73-80